# EUROPÄISCHE PATENTSCHRIFT

(11) **EP 0 971 003 B1**
(45) Veröffentlichungstag und Bekanntmachung des Hinweises auf die Patenterteilung: **17.10.2001**
(21) Anmeldenummer: 99112437.1
(22) Anmeldetag: 30.06.1999
(51) Int. Cl.: C09B 69/04, C09B 56/04, C09B 45/28, C09D 11/02

(54) **Wasserlösliche schwarze Stilbenfarbstoffe, ihre Herstellung und Verwendung**
Water soluble black stilbene dyes, their preparation and use
Colorants noirs solubles dans l'eau de type stilbène, leur préparation et leur utilisation

(30) Priorität: 10.07.1998 DE 19831095
(43) Veröffentlichungstag der Anmeldung: 12.01.2000
(73) Patentinhaber: Clariant GmbH, 65929 Frankfurt am Main (DE)
(72) Erfinder: Bauer, Wolfgang, Dr., 63477 Maintal (DE); Menzel, Heidemarie, 65812 Bad Soden (DE); Geisenberger, Josef, Dr., 65843 Sulzbach (DE); Pedrazzi, Reinhard, Dr., 4123 Allschwil (CH)

(56) Entgegenhaltungen:
- EP-A- 0 057 158
- EP-A- 0 146 747
- EP-A- 0 841 378
- DE-A- 3 247 605
- GB-A- 1 409 326

## Beschreibung

Die vorliegende Erfindung betrifft wasserlösliche schwarze Stilbenfarbstoffsalze sowie ihre Verwendung zur Herstellung von Aufzeichnungsflüssigkeiten für das Ink-Jet-Verfahren.

Beim Tintenstrahl - oder Ink - Jet - Verfahren handelt es sich um ein berührungsloses Druckverfahren, bei dem Tröpfchen der Aufzeichnungsflüssigkeit aus einer oder mehreren Düsen auf das zu bedruckende Substrat gelenkt werden. Eine Aufzeichnungsflüssigkeit besteht im Prinzip aus einem löslichen Farbstoff, der in einem Lösungsmittel, meist Wasser, oder in einem Lösungsmittelgemisch gelöst ist. Die Lösung enthält in der Regel noch weitere Hilfsmittel, wie z.B. oberflächenaktive Substanzen, Feuchthaltemittel und/ oder Konservierungsmittel. Um Drucke hoher Schärfe und guter Auflösung zu erhalten, müssen an Aufzeichnungsflüssigkeiten für das Tintenstrahl-Druckverfahren höchste Anforderungen , insbesondere im Hinblick auf Reinheit, Partikelfreiheit, Lagerstabilität, Viskosität sowie Oberflächenspannung gestellt werden. Diese und andere Forderungen bedingen, daß die zur Herstellung der Aufzeichnungsflüssigkeiten eingesetzten Farbstoffe praktisch keine Salze oder Stellmittel enthalten dürfen und insbesondere eine hohe Löslichkeit aufweisen müssen.

Weiterhin werden sehr hohe Anforderungen an die Farbstärke, Brillanz, Lichtechtheit, Wasserechtheit und Reibechtheit gestellt.
Das Tintenstrahl- oder Ink-Jet-Verfahren und die an die Farbstoffe bzw. Aufzeichnungsflüssigkeiten gestellten Anforderungen sind z. B. beschrieben in: Ullmann's Encyclopedia of Industrial Chemistry, 5^{th} Edition, Vol.A 13 (1989), 588-594.

Die Entwicklung von wasserlöslichen schwarzen Farbstoffen für das Tintenstrahl-Druckverfahren, welche die gewünschte Kombination von hoher Farbstärke, hoher Lichtechtheit und guter Wasserechtheit aufweisen, hat sich bisher als sehr schwierig erwiesen (s. beispielsweise P. Gregory, High - Technology Applications of Organic Colorants, Plenum Press, New York (1991), S. 195).
Eine hohe Lichtechtheit ist insbesondere von großer Bedeutung für Ink-Jet-Anwendungen in Außenbereichen und bei der Herstellung von Ink-Jet-Drucken mit photographischer Qualität.
Es besteht somit ein Bedarf an wasserlöslichen Farbstoffen, welche den bereits bekannten Schwarz-Farbstoffen in der Lichtechtheit überlegen sind und gleichzeitig die weiteren für den Ink-Jet-Bereich geforderten Eigenschaften aufweisen.

Schwarze Stilbenfarbstoffe wurden bereits in verschiedenen Patentschriften beschrieben. Diese ursprünglich für das Färben und Bedrucken von Textilfasern hergestellten Farbstoffe liegen insbesondere als Natriumsalze vor und enthalten üblicherweise von der Herstellung her beträchtliche Mengen an Salzen, wie z. B. Natriumsulfat, Natriumacetat und insbesondere Natriumchlorid.
Ferner werden diesen pulverförmigen Farbstoffen noch zusätzlich Stellmittel, beispielsweise Natriumcarbonat, Alkaliphosphate, Harnstoff oder aliphatische Carbonsäuren zugesetzt.
Feste Farbstoffpräparationen von wasserlöslichen Stilbenfarbstoffen der allgemeinen Formel (A) 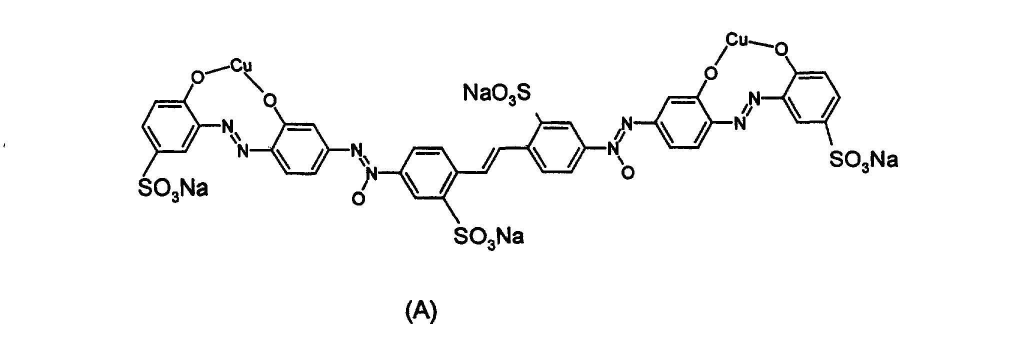 sind beispielsweise beschrieben in der EP-A-0 057 158 und in der DE-A-3 247 605.

Solche salzhaltigen Farbstoffe sind zur Herstellung von Aufzeichnungsflüssigkeiten für das Tintenstrahl-Druckverfahren nicht geeignet, insbesondere weil Korrosion an den Düsen eintritt, aber auch aufgrund einer zu geringen Löslichkeit der Farbstoffe und einer schlechten Lagerstabilität der Drucktinten, die mit Viskositätserhöhung, Farbstoffausscheidung und Verstopfung der Düsen verbunden ist. Darüberhinaus ergeben sich Nachteile im Hinblick auf die Oberflächenspannung, wodurch eine optimale Tintentropfenbildung beim Einsatz im Tintenstrahl-Druckverfahren verhindert wird.
Farbstoffe der Formel (A) sind für das Tintenstrahl-Druckverfahren in unlöslicher, an anorganische oder organische Partikel gebundener Form (EP-A-0 656 406) sowie zum Bedrucken von Textil-, insbesondere Polyamidfasern (EP-A-0 583 133) eingesetzt worden.
Die nach EP-A-0 583 133 zum Bedrucken von Textilfasern eingesetzten Tinten enthalten zum Einstellen alkalischer pH-Werte Natriumhydroxid und liegen überwiegend als Natriumsalze vor.

Aufgrund der Schwerlöslichkeit des Natriumsalzes des Stilbenfarbstoffs der Formel (A) ist dieser Farbstoff jedoch zur Herstellung von Drucktinten für das Ink-Jet-Druckverfahren nicht geeignet.

Es bestand daher die Aufgabe, schwarze Farbstoffe für das Ink-Jet-Druckverfahren bereitzustellen, welche die Nachteile der bereits bekannten Farbstoffe nicht aufweisen und die vorstehend genannten Anforderungen an Farbstärke, Brillanz, Lichtechtheit, Wasser- und Reibechtheit erfüllen.

Gegenstand der vorliegenden Erfindung sind schwarze Stilbenfarbstoffe der allgemeinen Formel (I) 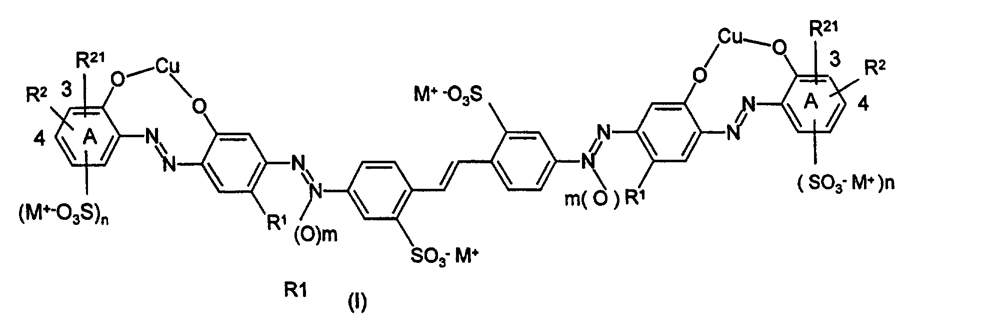 worin
R¹ Wasserstoff, Alkyl mit 1 bis 4 C-Atomen, Alkoxy mit 1 bis 4 C-Atomen;
R² Wasserstoff, Carboxy, Chlor, Nitro;
R²¹ Wasserstoff; oder R² und R²¹ bilden gemeinsam einen in 3- und 4-Position des Ringes A ankondensierten Benzolring, der 1, 2 oder 3 Sulfogruppen tragen kann;
m eine Zahl von 0 bis 1;
n eine Zahl von 1 bis 2;
M⁺ ein Kation oder ein Gemisch verschiedener Kationen bedeuten, wobei pro Mol des Farbstoffs mindestens 1 Äquivalent der Kationen M⁺ Lithium-Kationen und/oder Kationen der Formel (II) 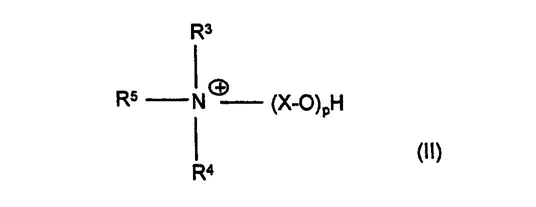
sind,
wobei p eine Zahl von 1 bis 30;
X CH₂CH₂, CH(CH₃)CH₂, CH₂CH(CH₃) oder eine Kombination davon; und R³, R⁴ und R⁵ unabhängig voneinander Wasserstoff, eine Gruppe der Formel (III)

-(-X-O-)ₚH (III)

oder einen aliphatischen Rest mit 1 bis 18 C-Atomen bedeuten.

Bevorzugt sind Farbstoffe der Formel (I), worin M⁺ Lithium-Kationen oder Kationen der Formeln (II) bedeutet, worin p eine Zahl von 1 bis 15 ist. In besonders bevorzugten Farbstoffen der Formel (I) liegen Mischungen von Lithium-Kationen und Kationen der Formel (II) vor.

Weiterhin bevorzugt sind Farbstoffe der Formel (I), worin R²¹ die Bedeutung Wasserstoff hat.

Weiterhin bevorzugt sind Farbstoffe der Formel (I), worin R¹ Wasserstoff, Methyl, Ethyl, Methoxy oder Ethoxy bedeutet.
Besonders bevorzugt sind Farbstoffe der Formel (IB) 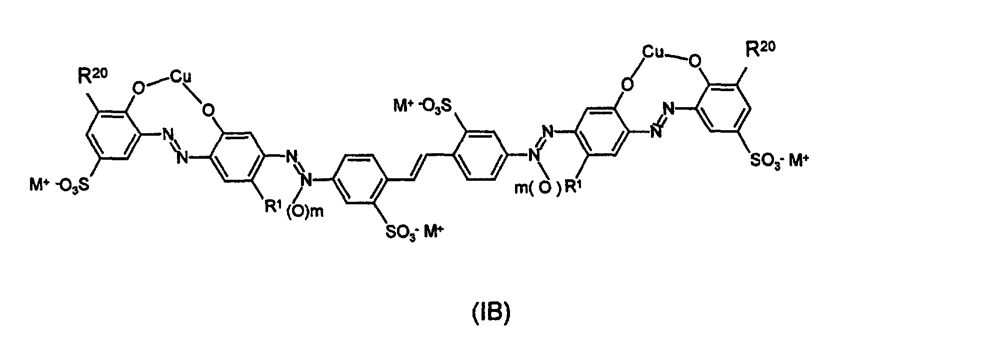 worin R¹, M und m wie vorstehend definiert und R²⁰ Wasserstoff, Sulfo, Cl, Nitro oder Carboxyl ist.

Die Herstellung der Stilbenfarbstoffe in Form der Natriumsalze ist an sich bekannt und beispielsweise beschrieben in Houben-Weyl, Methoden der Organischen Chemie, Bd. X/3 (1965), S. 339-343.
Danach erfolgt die Farbstoff-Synthese von Stilbenfarbstoffen durch alkalische Kondensation von 4,4'-Dinitrostilben-2,2'-disulfonsäure der Formel (IV) 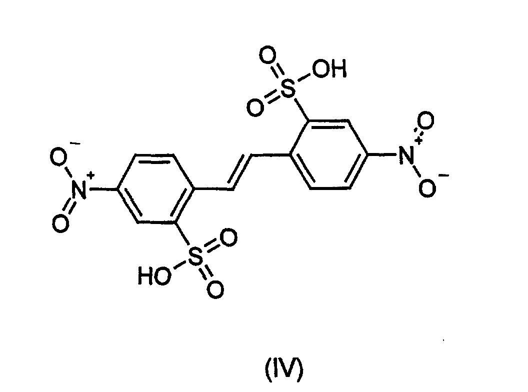 mit Aminoazo-Verbindungen in Form ihrer Kupferkomplexe der Formel (V)

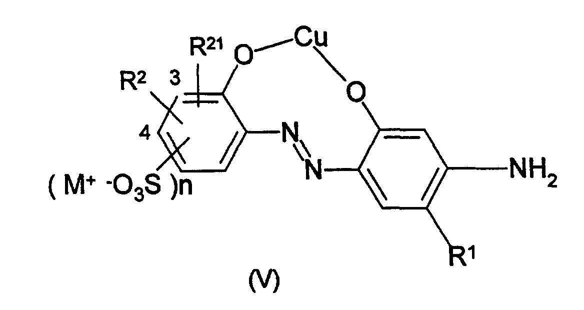

Alternativ kann die Kupferkomplexbildung auch nach der alkalischen Kondensation erfolgen.
Da die alkalische Kondensation von 4,4'-Dinitrostilben-2,2'-disulfonsäure mit Aminoazoverbindungen nach den genannten Methoden mit Natriumhydroxid vorgenommen werden, liegen die so hergestellten Farbstoffe als Natriumsalze vor. Die erfindungsgemäßen Lithium- bzw. Ammoniumsalze von Stilbenfarbstoffen der Formel (I) werden beispielsweise so hergestellt, daß man die Natriumsalze der entsprechenden Stilbenfarbstoffe im wäßrigen Medium mit einer Säure auf pH-Werte zwischen 0 und 3, vorzugsweise zwischen 0 und 2, stellt, die erhaltenen Farbsäuren abtrennt, wäscht, und anschließend im wäßrigen Medium mit Lithiumhydroxid und/oder dem Lithiumsalz einer hinreichend schwachen Säure und/oder einem Amin der Formel (VI) oder einem Ammoniumhydroxid der Formel (VII)

R³R⁴N(-X-O-)ₚH (VI)

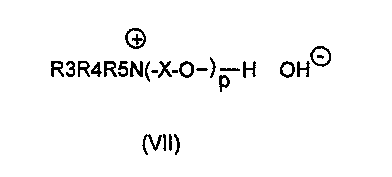

worin R³, R⁴, R⁵, X und p die oben bereits angegebenen Bedeutungen besitzen, vereinigt, wobei erfindungsgemäße Farbsalze der Formel (I) entstehen. Säuren, welche zur Herstellung der oben genannten Farbsäuren geeignet sind, sind anorganische Säuren, wie z.B. Salzsäure, Schwefelsäure, Salpetersäure oder Phosphorsäure, oder organische Säuren, z.B. Trichloressigsäure, Methansulfonsäure, Trifluormethansulfonsäure oder Polystyrolsulfonsäure. Es kann auch ein Gemisch anorganischer oder organischer Säuren verwendet werden.

Die Überführung der Natriumsalze von Farbstoffen der Formel (I) in die entsprechenden Farbsäuren geschieht vorzugsweise so, daß das Natriumsalz in die wäßrige Lösung der anorganischen und/oder organischen Säure eingetragen und daß die erhaltene Suspension einige Zeit, beispielsweise 0,5 bis 4 Stunden, bei Temperaturen zwischen 25 und 80°C, vorzugsweise 40 bis 60°C, nachgerührt wird. Die Abtrennung der Farbsäure geschieht normalerweise durch Filtration, kann aber auch z.B. durch Zentrifugation erfolgen.
Die abgetrennte Farbsäure wird dann zweckmäßigerweise mit verdünnten Mineralsäuren und/oder organischen Lösungsmitteln, vorzugsweise Methanol, Ethanol, n-Propanol, Isopropanol oder Ethylenglykoldimethylether gewaschen, um den größten Teil des Elektrolyten zu entfernen.

Zur Neutralisation der Farbsäure benötigte Lithiumverbindungen anorganischer oder organischer Säuren sind beispielsweise: Lithiumhydroxid, Lithiumcarbonat, Lithiumsulfit, Lithiumborat, Trilithiumphosphat, Lithiumacetat.
Vorzugsweise wird zur Einführung des Lithium-Kations Lithiumhydroxid oder Lithiumcarbonat eingesetzt. Die Farbsäuren können auch mit einem Gemisch aus Lithiumhydroxid und/oder einem oder mehreren Lithiumsalzen hinreichend schwacher Säuren und/oder einem oder mehreren Aminen der Formel (VI) oder Ammoniumhydroxiden der Formel (VII) umgesetzt werden.

Farbstoffe der Formel (I) können alternativ auch so hergestellt werden, daß bei der alkalischen Kondensation der Edukte der Formeln (IV) und (V) wäßriges Lithiumhydroxid anstelle von Natriumhydroxid bei einer Temperatur von 60 bis 140°C, gegebenenfalls unter Druck, eingesetzt wird. Dabei entstehen unmittelbar die Lithiumsalze der Farbstoffe der Formel (I).
Sehr vorteilhafte erfindungsgemäße Farbsalze der Formel (I) enthalten sowohl Lithium-Kationen als auch Ammonium-Kationen der Formel (II). Diese Farbsalze werden erhalten, wenn die erhaltenen Farbsäuren mit einer Mischung aus Lithiumkationen spendenden Substanzen und einem oder mehreren Aminen der Formel (VI) oder Ammoniumhydroxiden der Formel (VII) umgesetzt werden.
Die Amine der Formel (VI) sind bekannt bzw. handelsübliche Substanzen; p bedeutet vorzugsweise eine Zahl von 1 bis 15.
Geeignete Amine der Formel (VI) sind beispielsweise: Ethanolamin, Diethanolamin, Triethanolamin, N-Methyl-N-ethanolamin, N-Methyl-N-diethanolamin, 2-(2-Hydroxyethoxy)-ethanamin, Di-(2-(2-hydroxyethoxy)-ethan)-amin, Tri-(2-(2-hydroxyethoxy)ethan)-amin, ethoxylierter und propoxylierter Ammoniak, primäre, sekundäre und tertiäre aliphatische Amine mit 1 oder 2 C₁-C₁₈-Alkylresten und 2 oder 1 (Poly)oxy-(C₂-C₃)-alkylenketten mit 1 bis 30, vorzugsweise 1 bis 25, Hydroxyethyl- und/oder Hydroxypropyl-Einheiten in der Kette. Ethoxylierte Fettamine sind unter verschiedenen Bezeichnungen im Handel, z.B. als ®Genamine der Firma Clariant.
Dabei handelt es sich zumeist um ethoxyliertes Cocosfettamin, Spermölfettamin, Stearylamin und Talgfettamin mit Ethoxylierungsgraden von zumeist 2 bis 25. Diese Produkte sind technische Gemische entsprechend der Zusammensetzung der zur Herstellung der Fettamine benutzten Fettsäuren.
Es kann zweckmäßig sein, ein Gemisch aus Ethanolamin und/ oder Diethanolamin und/oder Triethanolamin und einem handelsüblichen ethoxyliertem Fettamin mit Ethoxylierungsgraden von 2 bis 25 einzusetzen.

Bei der Umsetzung der Farbsäuren mit Lithiumverbindungen undloder einem Amin der Formel (VI) oder einem Ammoniumhydroxid der Formel (VII) wird bevorzugt eine Menge gewählt, welche in dem wäßrigen Medium zur Einstellung eines pH-Wertes von 7 bis 10, vorzugweise 8 bis 9, benötigt wird.

Alternativ können die Natriumsalze von schwarzen Stilbenfarbstoffen in bevorzugt wäßriger Lösung mit Ammoniumsalzen lipophiler Amine, beispielsweise Tri-n-butylamin, Tri-n-pentylamin, Tri-n-hexylamin, Tri-( 2-ethylhexyl)-amin, in die entsprechenden wasserunlöslichen oder schwer wasserlöslichen Ammoniumsalze von Stilbenfarbstoffen der Formel (I) überführt werden, welche anschließend abgetrennt und salzfrei gewaschen werden können. Durch nachfolgende Umsetzung mit vorzugsweise Lithiumhydroxid in wäßriger Lösung können dann die salzarmen, gut löslichen Lithiumsalze der eingesetzten schwarzen Stilbenfarbstoffe gebildet und die lipophilen Amine zurückgewonnen werden.

Die erfindungsgemäßen Stilben-Farbstoffsalze der Formel (I) können aus den zunächst erhaltenen, bevorzugt wäßrigen Reaktionsgemischen durch übliche Aufarbeitungsmethoden, beispielsweise durch Aussalzen, Filtrieren oder durch Sprühtrocknung, gegebenenfalls nach Entsalzung mittels Membranfiltration, isoliert werden.
Es kann jedoch auch auf eine Isolierung verzichtet werden und eine Lösung, die das erfindungsgemäße Farbstoffsalz der allgemeinen Formel (I) enthält, durch Zusatz von organischen Basen, organischen Lösungsmitteln und/oder hydrotropen Substanzen direkt in konzentrierte Farbstoff-Lösungen oder Aufzeichnungsflüssigkeiten übergeführt werden.
Als organische Basen kommen beispielsweise Monoethanolamin, Diethanolamin, Triethanolamin, 2-Aminopropanol, 3-Aminopropanol, Dipropanolamin, Tripropanolamin, N-Methylaminoethanol, N,N-Dimethylaminoethanol, N-Phenylaminopropanol, Ethylendiamin, Tetramethylethylendiamin, Tetramethylpropylendiamin, Tetramethylhexylendiamin, Diethylentriamin, Triethylentetramin oder Polyethylenimin in Betracht.
Als organische Lösungsmittel und hydrotrope Verbindungen können beispielsweise Formamid, Harnstoff, Tetramethylharnstoff, ε-Caprolactam, Ethylenglykol, Diethylenglykol, Triethylenglykol, Polyethylenglykol, Butylglykol, Methylcellosolve, Glycerin, N-Methylpyrrolidon, 1,3-Diethyl-2-imidazolidinon,Thiodiglykol, Natrium-Xylolsulfonat, Natrium-Cumolsulfonat oder Natrium-Butylmonoglykolsulfat eingesetzt werden.
Hydrotrope Verbindungen sind beispielsweise beschrieben in Melliand 43, 718 (1962), Angew. Chem. 63, 327 (1951).

Die erfindungsgemäßen Stilben-Farbstoffe eignen sich auch zum Färben und Bedrucken von Baumwolle, Polyamid, Papier oder Leder oder als Farbmittel in elektrophotographischen Tonern und Entwicklern, wie z.B. Einkomponenten- und Zweikomponentenpulvertonern, Magnettonern, Flüssigtonem, Polymerisationstonem sowie weiteren Spezialtonern und in Pulverlacken.

Weiterhin sind die erfindungsgemäßen Farbstoffsalze auch geeignet als Farbmittel für Farbfilter sowohl für die additive wie subtraktive Farberzeugung (s. beispielsweise P. Gregory, "Topics in Applied Chemistry: High Technology Applications of Organic Colorants", Plenum Press, New York, 1991, S. 15- 25).

Insbesondere eignen sich die erfindungsgemäßen Farbstoffe der Formel (I) zur Herstellung von Aufzeichnungsflüssigkeiten für das Tintenstrahl- oder Ink-Jet-Druckverfahren, aber auch zur Herstellung von Tinten für andere Druck-, Vervielfältigungs-, Markierungs- Schreib-, Zeichen-, Stempel- oder Registrierverfahren.
Dabei werden schwarze Druckbilder von ausgezeichneter Qualität erhalten, die sich durch eine hohe Brillanz , Druckschärfe und optische Dichte sowie durch eine ausgezeichnete Lichtechtheit, Abriebfestigkeit und Wasserechtheit, auch auf normalen, nicht beschichteten Papiersorten auszeichnen.

Gegenstand der vorliegenden Erfindung sind auch Aufzeichnungsflüssigkeiten, welche einen oder mehrere der wasserlöslichen Stilben-Farbstoffe der Formel (I) enthalten.
Die fertigen Aufzeichnungsflüssigkeiten enthalten im allgemeinen insgesamt 0,5 bis 15 Gew.-%, vorzugsweise 1,5 bis 8 Gew.-%, (trocken gerechnet) eines oder mehrerer, z.B. 2 oder 3, löslicher Farbstoffe der allgemeinen Formel (I). Zweckmäßig sind 5 bis 99 Gew.-% Wasser und 0,5 bis 94,5 Gew.-% organisches Lösungsmittel und/ oder hydrotrope Verbindungen.
In einer bevorzugten Ausführungsform enthalten einsatzbereite Aufzeichnungsflüssigkeiten 0,5 bis 15 Gew.% Farbstoff der Formel (I), 40 bis 85 Gew.-% Wasser und 10 bis 50 Gew.-% organisches Lösungsmittel und/ oder hydrotrope Verbindungen, in einer anderen Ausführungsform 0,5 bis 15 Gew.-% Farbstoff der Formel (I), 5 bis 20 Gew.-% Wasser und 70 bis 94,5 Gew.-% organisches Lösungsmittel und/ oder hydrotrope Verbindungen. Die Aufzeichnungsflüssigkeiten können noch weitere, nachstehend erwähnte Zusätze enthalten.
Zur Herstellung der Aufzeichnungsflüssigkeiten benutztes Wasser wird vorzugsweise in Form von destilliertem oder entsalztem Wasser eingesetzt. Bei den in den Aufzeichnungsflüssigkeiten enthaltenen Lösungsmitteln kann es sich um ein organisches Lösungsmittel oder um ein Gemisch derartiger Lösungsmittel handeln, wobei mit Wasser mischbare Lösungsmittel bevorzugt sind. Geeignete Lösungsmittel sind beispielsweise ein- oder mehrwertige Alkohole, deren Ether und Ester, z. B. Alkanole, insbesondere mit 1 bis 4 C-Atomen, wie z.B. Methanol, Ethanol, Propanol, Isopropanol, Butanol, Isobutanol; zwei - oder dreiwertige Alkohole, insbesondere mit 2 bis 6 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykolmono-methyl-, -ethyl- oder -butyl-ether, Triethylenglykol-mono-methyl- oder -ethyl-ether; Ketone und Ketonalkohole wie z. B. Aceton, Methylethylketon, Diethylketon, Methylisobutylketon, Methylpentylketon, Cyclopentanon, Cyclohexanon, Diacetonalkohol; Amide, wie z. B. Dimethylformamid, Dimethylacetamid, N-Methylpyrrolidon; ferner Tetramethylharnstoff oder Thiodiglykol.

Weiter können die erfindungsgemäßen Aufzeichnungsflüssigkeiten noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z. B. Ethanolamin, Diethanolamin, Triethanolamin, N,N-Dimethylethanolamin oder Diisopropylamin, dienen hauptsächlich zur Erhöhung des pH-Wertes der Aufzeichnungsflüssigkeit. Sie sind normalerweise zu 0 bis 10 Gew.-%, vorzugsweise 0,5 bis 5 Gew.-% in der Aufzeichnungsflüssigkeit vorhanden.

Den Aufzeichnungsflüssigkeiten für das Ink-Jet-Druckverfahren können je nach Ausführungsform des Druckverfahrens, z.B. als Continuous-Jet-, Intermittent-Jet-, Impuls-Jet- oder Compound-Jet-Verfahren, gegebenenfalls noch weitere Additive, z.B. zur Pufferung des pH-Wertes, zur Einstellung der elektrischen Leitfähigkeit, der spezifischen Wärme, des thermischen Expansionskoeffizienten und der Leitfähigkeit zugesetzt werden.

Bei der Lagerung erfindungsgemäßer Aufzeichnungsflüssigkeiten tritt keine Abscheidung von Niederschlägen auf, welche zu unscharfen Druckbildern oder zur Verstopfung von Düsen führt.
Die erfindungsgemäßen Aufzeichnungsflüssigkeiten liegen hinsichtlich Viskosität und Oberflächenspannung in den für das Ink-Jet-Verfahren geeigneten Bereichen. Sie liefern Druckbilder hoher optischer Dichte mit ausgezeichneter Lichtechtheit, Wasserechtheit, Abriebfestigkeit und Auflösung.

Die folgenden Beispiele dienen zur Erläuterung der Erfindung, ohne sie jedoch einzuschränken. Bei den Gehaltsangaben handelt es sich um Gewichtsprozente.

### Beispiel 1 (Herstellung der Farbstoffsäure)

100 g des schwarzen Stilben-Farbstoffs der Formel (A) mit einem Reinfarbstoffgehalt von 60 % (Rest Natriumchlorid und Natriumsulfat) werden bei 20 - 25°C portionsweise unter Rühren in 550 g einer 8 % igen wäßrigen Schwefelsäure eingetragen. Die schwefelsaure Suspension wird langsam im Verlauf von 1 Stunde auf 70°C erwärmt und 2 Stunden bei 70°C nachgerührt.
Anschließend filtriert man und wäscht den Filterkuchen mit 100 g 8 % iger wäßriger Schwefelsäure und 500 g Methanol nach.
Nach Trocknen bei 50°C im Vakuum erhält man ein schwarzes Farbstoffpulver des Stilbenfarbstoffs in Form der freien Säure mit einem Farbstoffgehalt von 91,7 % (Cu-Gehalt: 10,0 %).

### Beispiel 2

5,0 g der nach Beispiel 1 erhaltenen Farbsäure werden bei 20 - 25 ° C in eine Mischung von 33,0 g Diethylenglykol, 40 ml entsalztem Wasser und 16 ml 1 N Lithiumhydroxid-Lösung eingetragen. Man rührt 1 Stunde bei 25 ° C nach und stellt dann mit entsalztem Wasser ein Endgewicht von 100,0 g ein.
Man erhält eine rückstandsfreie Lösung des schwarzen Stilbenfarbstoffs in Form des Lithiumsalzes, welche einen pH-Wert von 7,7 und eine gute Lagerstabilität aufweist und hervorragend als Tinte für Ink-Jet-Druckverfahren geeignet ist. Es werden Druckbilder hoher optischer Dichte, guter Wasserechtheit und hervorragender Lichtechtheit erhalten.

### Beispiel 3

Verfährt man nach den Angaben des Beispiels 2, setzt jedoch statt 16 ml 1 N Lithiumhydroxid-Lösung eine Mischung von 9 ml 1 N Lithiumhydroxid-Lösung und 1,0 g Diethanolamin ein, so erhält man eine lagerstabile Lösung des schwarzen Stilben-Farbstoffs in Form des gemischten Lithium-/Diethanolammonium-Salzes, die hervorragend als Tinte für Ink-Jet-Druckverfahren geeignet ist, wobei Druckbilder von ausgezeichneter Lichtechtheit und Druckschärfe erhalten werden.

### Vergleichsbeispiel

5,0 g der nach Beispiel 1 erhaltenen Farbsäure werden in eine Mischung von 33,0 g Diethylenglykol, 16 ml 1 N Natronlauge und 40 ml entsalztem Wasser eingetragen. Nach Einstellen eines Endgewichts von 100,0 g mit entsalztem Wasser erhält man den schwarzen Stilben-Farbstoff der Formel (A) in Form des Natrium-Salzes. In der erhaltenen Mischung ist dieser Farbsoff weitgehend ausgefallen. Diese Mischung ist als Tinte für das Ink-Jet-Druckverfahren ungeeignet, da aufgrund des ausgefallenen Farbstoffs Verstopfung an den Düsen des Druckkopfs eintritt und der Druckvorgang unterbrochen wird.

In der nachfolgenden Tabelle sind weitere erfindungsgemäße schwarze Stilbenfarbstoff-Salze der Formel (IB) aufgeführt, 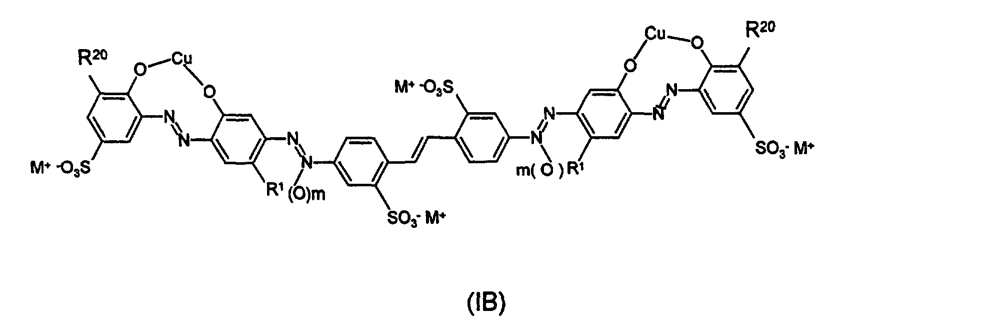 welche nach den Beispielen 2 oder 3 hergestellt wurden und die sich hervorragend zur Herstellung von Tinten für Ink-Jet-Druckverfahren eignen.
Dabei bedeutet in der Spalte "M⁺":
M² = protoniertes handelsübliches ethoxyliertes Cocosfettamin mit 2 EO-Einheiten
M³ = protonieres handelsübliches ethoxyliertes Cocosfettamin mit 15 EO-Einheiten
M⁴ = protoniertes handelsübliches Oleylamin mit 2 EO-Einheiten
M⁵ = protoniertes handelsübliches Talgfettamin mit 2 EO-Einheiten
M⁶ = protoniertes handelsübliches ethoxyliertes Stearylamin mit 8 EO-Einheiten "EO" bedeutet Ethylenoxid.

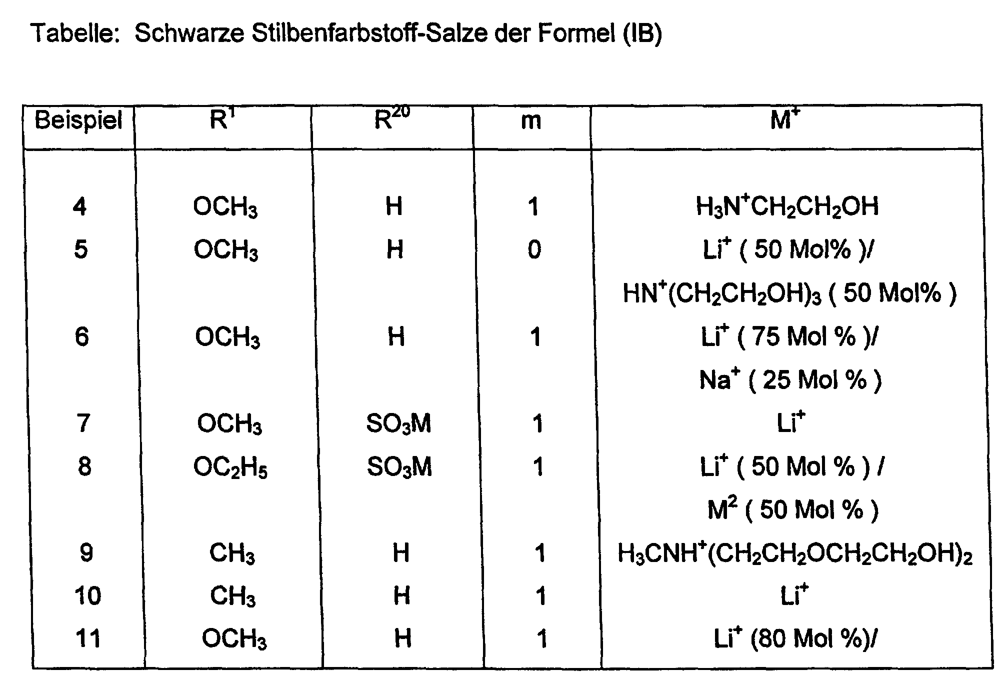

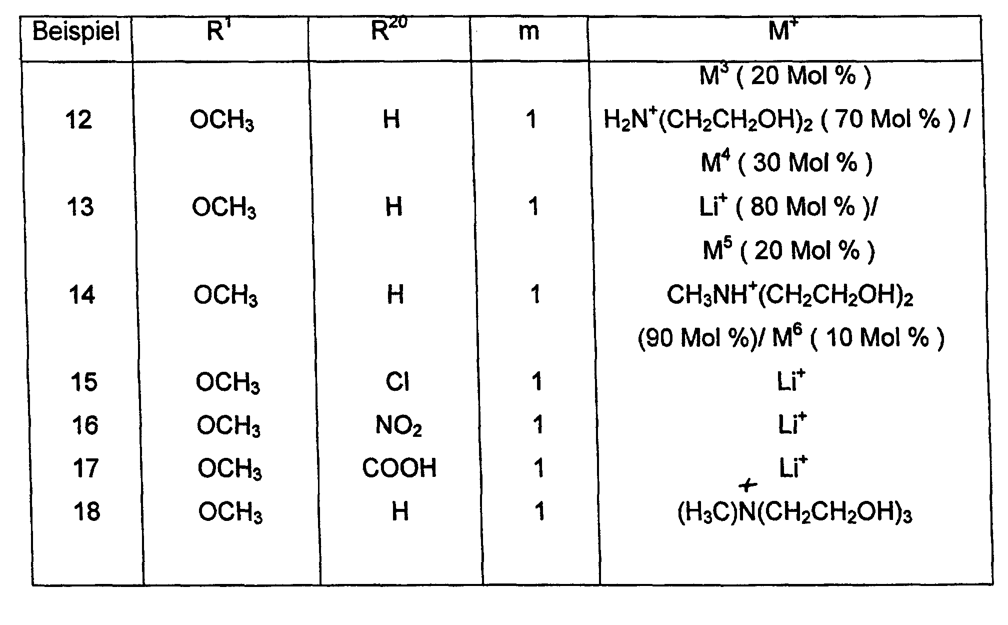

## Patentansprüche

1. Farbstoff der allgemeinen Formel (I) 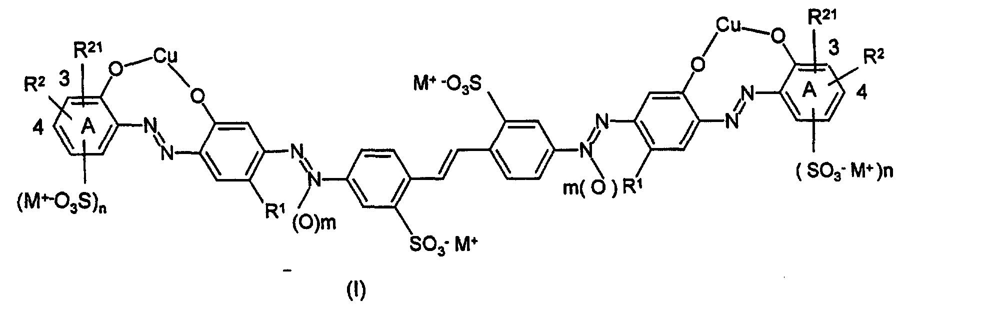 worin
R¹ Wasserstoff, Alkyl mit 1 bis 4 C-Atomen, Alkoxy mit 1 bis 4 C-Atomen;
R² Wasserstoff, Carboxy, Chlor, Nitro;
R²¹ Wasserstoff; oder R² und R²¹ bilden gemeinsam einen in 3- und 4-Position des Ringes A ankondensierten Benzolring, der 1, 2 oder 3 Sulfogruppen tragen kann;
m eine Zahl von 0 bis 1;
n eine Zahl von 1 bis 2;
M⁺ ein Kation oder ein Gemisch verschiedener Kationen bedeuten, wobei pro Mol des Farbstoffs mindestens 1 Äquivalent der Kationen M⁺ Lithium-Kationen und/oder Kationen der Formel (II) 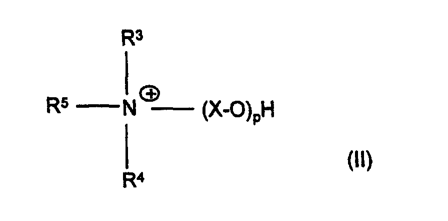
sind,
wobei p eine Zahl von 1 bis 30;
X CH₂CH₂, CH(CH₃)CH₂, CH₂CH(CH₃) oder eine Kombination davon; und R³, R⁴ und R⁵ unabhängig voneinander Wasserstoff, eine Gruppe der Formel (III)
-(-X-O-)ₚH (III)
oder einen aliphatischen Rest mit 1 bis 18 C-Atomen bedeuten.

2. Farbstoff nach Anspruch 1, **dadurch gekennzeichnet, daß** p eine Zahl von 1 bis 15 ist.

3. Farbstoff nach Anspruch 1 oder 2, **dadurch gekennzeichnet, daß** M eine Mischung von Lithium-Kationen und Kationen der Formel (II) ist.

4. Farbstoff nach mindestens einem der Ansprüche 1 bis 3, **dadurch gekennzeichnet, daß** R¹ Wasserstoff, Methyl, Ethyl, Methoxy oder Ethoxy ist.

5. Farbstoff nach mindestens einem der Ansprüche 1 bis 4, **dadurch gekennzeichnet, daß** R²¹ Wasserstoff ist.

6. Farbstoff nach mindestens einem der Ansprüche 1 bis 5, **gekennzeichnet durch** die allgemeine Formel (IB) 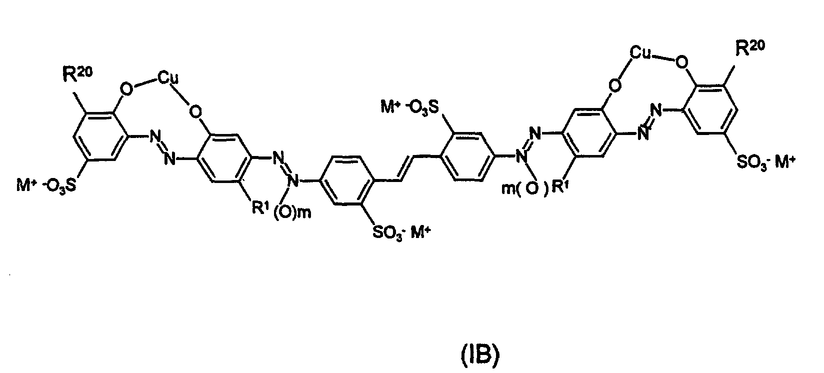 worin R¹, M und m wie in Anspruch 1 definiert sind und R²⁰ Wasserstoff, Sulfo, Cl, Nitro oder Carboxyl ist.

7. Farbstoff nach mindestens einem der Ansprüche 1 bis 6, **dadurch gekennzeichnet, daß** das der Formel (II) zugrundeliegende Amin Ethanolamin, Diethanolamin, Triethanolamin, N-Methyl-N-ethanolamin, N-Methyl-N-diethanolamin, 2-(2-Hydroxyethoxy)-ethanamin, Di-(2-(2-hydroxyethoxy)-ethan)-amin, Tri-(2-(2-hydroxyethoxy)ethan)-amin, ethoxylierter und propoxylierter Ammoniak, ein primäres, sekundäres oder tertiäres aliphatisches Amin mit 1 oder 2 C₁-C₁₈-Alkylresten und 2 oder 1 (Poly)oxy-(C₂-C₃)-alkylenketten mit 1 bis 30, vorzugsweise 1 bis 25, Hydroxyethyl- und/oder Hydroxypropyl-Einheiten in der Kette.

8. Farbstoff nach mindestens einem der Ansprüche 1 bis 7, **dadurch gekennzeichnet, daß** das der Formel (II) zugrundeliegende Amin ein ethoxyliertes und/oder propoxyliertes Cocosfettamin, Spermölfettamin, Stearylfettamin oder Talgfettamin mit Alkoxylierungsgraden von 2 bis 25 ist.

9. Verfahren zur Herstellung eines Farbstoffes nach einem oder mehreren der Ansprüche 1 bis 8, **dadurch gekennzeichnet, daß** das Natriumsalz des Farbstoffes der Formel (I), worin M = Na ist, in wäßriger Lösung mit einer Säure in die entsprechende Farbsäure überführt und diese Farbsäure mit einer Lithiumverbindung oder/und einem Amin der Formel (VI) und/oder einem Ammoniumhydroxid der Formel (VII)
R³R⁴N(-X-O-)ₚH (VI) 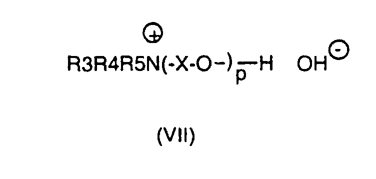
worin R³, R⁴, R⁵, X und p wie in Anspruch 1 definiert sind, umsetzt; oder daß das Natriumsalz des Farbstoffes der Formel (I) mit einem Ammoniumsalz eines lipophilen Amins in das entsprechende schwer wasserlösliche oder wasserunlösliche Ammoniumsalz des Farbstoffes umgesetzt, dieses abgetrennt und anschließend in wäßriger Lösung mit einer Lithiumverbindung und/oder einem Amin der Formel (VI) und/oder einem Ammoniumhydroxid der Formel (VII) umgesetzt wird.

10. Verfahren zur Herstellung eines Farbstoffes der Formel (I) mit M = Li gemäß einem oder mehreren der Ansprüche 1 bis 8, **dadurch gekennzeichnet, daß** eine Verbindung der Formel (IV) 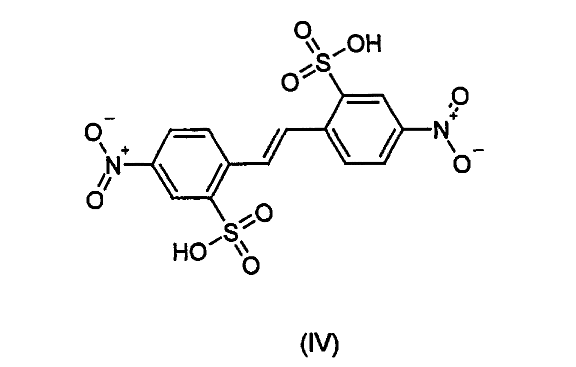 mit einer Verbindung der Formel (V) 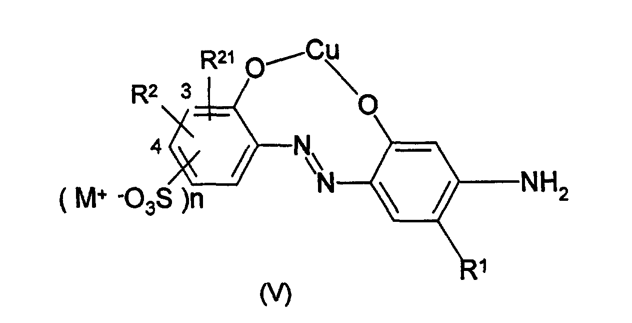 in Gegenwart von wäßrigem Lithiumhydroxid bei einer Temperatur von 60 bis 140°C kondensiert wird.

11. Aufzeichnungsflüssigkeit, enthaltend 0,5 bis 15 Gew.-%, vorzugsweise 1,5 bis 8 Gew.-%, eines oder mehrerer Farbstoffe gemäß einem oder mehreren der Ansprüche 1 bis 8.

12. Aufzeichnungsflüssigkeit nach Anspruch 11, bestehend im wesentlichen aus 0,5 bis 15 Gew.-% eines oder mehrerer der Farbstoffe, 5 bis 99 Gew.-%, vorzugsweise 40 bis 85 Gew.-%, Wasser und 0,5 bis 94,5 Gew.-%, vorzugsweise 10 bis 50 Gew.-%, organischem Lösungsmittel und/oder hydrotropen Verbindungen und gegebenenfalls weiteren üblichen Zusatzstoffen.

13. Aufzeichnungsflüssigkeit nach Anspruch 11, bestehend im wesentlichen aus 0,5 bis 15 Gew.-% eines oder mehrerer der Farbstoffe, 5 bis 20 Gew.-% Wasser und 70 bis 94,5 Gew.-% organischem Lösungsmittel und/oder hydrotropen Verbindungen und gegebenenfalls weiteren üblichen Zusatzstoffen.

14. Verwendung eines Farbstoffs nach einem oder mehreren der Ansprüche 1 bis 8 zur Herstellung von Tinte, insbesondere Ink-Jet-Tinten.

## Claims

1. A dye of the formula (I) 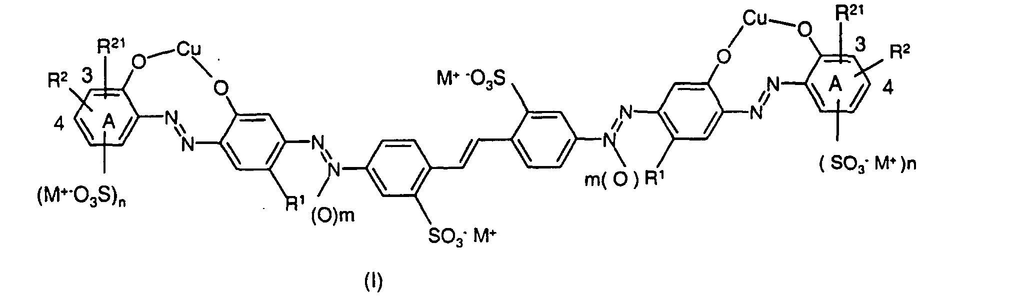 in which
R¹ is hydrogen, alkyl of 1 to 4 carbon atoms, or alkoxy of 1 to 4 carbon atoms;
R² is hydrogen, carboxyl, chloro or nitro;
R²¹ is hydrogen; or R² and R²¹ together form a benzene ring which is fused on in positions 3 and 4 of the ring A and can carry 1, 2 or 3 sulfo groups;
m is a number from 0 to 1;
n is a number from 1 to 2;
M⁺ is a cation or a mixture of different cations, at least one equivalent of the cations M⁺ per mole of the dye being lithium cations and/or cations of the formula (II) 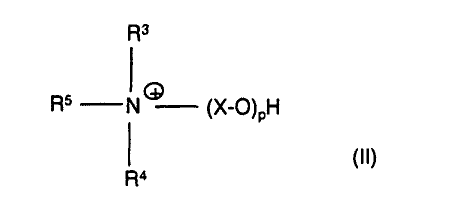 where p is a number from 1 to 30;
X is CH₂CH₂, CH(CH₃)CH₂, CH₂CH(CH₃) or a combination thereof and R³, R⁴ and R⁵ independently of one another are hydrogen, a group of the formula (III)
-(-X-O-)ₚH (III)
or an aliphatic radical of 1 to 18 carbon atoms.

2. A dye as claimed in claim 1, wherein p is a number from 1 to 15.

3. A dye as claimed in claim 1 or 2, wherein M is a mixture of lithium cations and cations of the formula (II).

4. A dye as claimed in at least one of claims 1 to 3, wherein R¹ is hydrogen, methyl, ethyl, methoxy or ethoxy.

5. A dye as claimed in at least one of claims 1 to 4, wherein R²¹ is hydrogen.

6. A dye as claimed in at least one of claims 1 to 5, which is of the formula (IB) 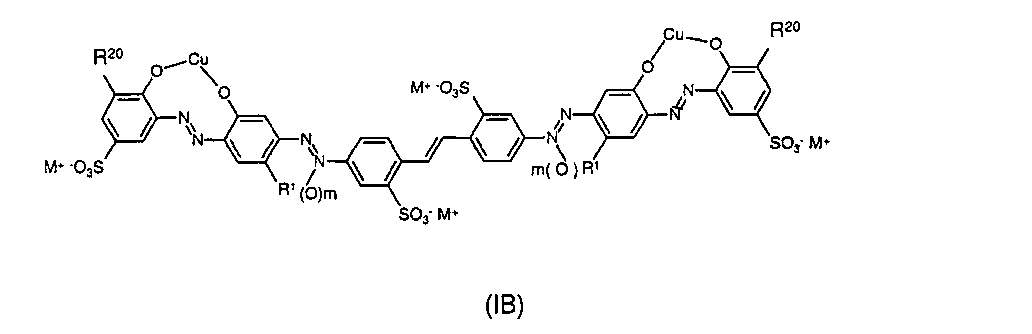 in which R¹, M and m are as defined in claim 1 and R²⁰ is hydrogen, sulfo, chloro, nitro or carboxyl.

7. A dye as claimed in at least one of claims 1 to 6, wherein the amine on which the formula (II) is based is ethanolamine, diethanolamine, triethanolamine, N-methyl-N-ethanolamine, N-methyl-N-diethanolamine, 2-(2-hydroxyethoxy)ethanamine, di(2-(2- hydroxyethoxy)ethan)amine, tri(2-(2-hydroxyethoxy)ethan)amine, ethoxylated or propoxylated ammonia, a primary, secondary or tertiary aliphatic amine having 1 or 2 C₁-C₁₈-alkyl radicals and 2 or 1 (poly)oxy(C₂-C₃)-alkylene chains having from 1 to 30, preferably from 1 to 25, hydroxyethyl and/or hydroxypropyl units in the chain.

8. A dye as claimed in at least one of claims 1 to 7, wherein the amine on which the formula (II) is based is an ethoxylated and/or propoxylated coconut fatty amine, sperm oil fatty amine, stearylamine or tallow fatty amine having degrees of ethoxylation of from 2 to 25.

9. A process for preparing a dye as claimed in one or more of claims 1 to 8, which comprises converting the sodium salt of the dye of the formula (I) in which M is Na in aqueous solution to the corresponding dye acid, using an acid, and reacting said dye acid with a lithium compound and/or with an amine of the formula (VI) and/or with an ammonium hydroxide of the formula (VII)
R³R⁴N(-X-O-)ₚH (VI) 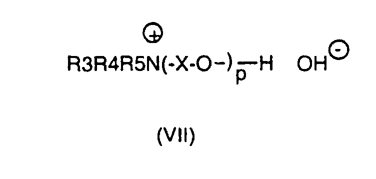
in which R³, R⁴, R⁵, X and p are as defined in claim 1; or
converting the sodium salt of the dye of the formula (I) to the corresponding, sparingly water-soluble or water-insoluble ammonium salt of the dye, using an ammonium salt of a lipophilic amine, separating off said ammonium salt and then reacting it in aqueous solution with a lithium compound and/or with an amine of the formula (VI) and/or with an ammonium hydroxide of the formula (VII).

10. A process for preparing a dye of the formula (I) where M is Li as claimed in one or more of claims 1 to 8, which comprises condensing a compound of the formula (IV) 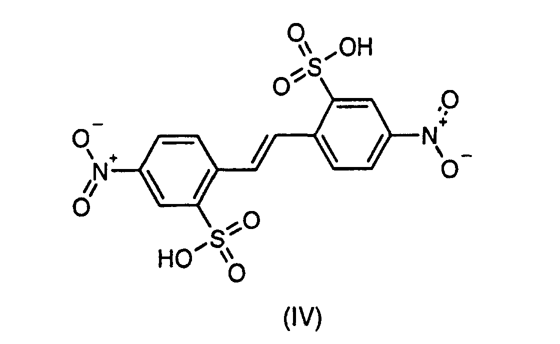 with a compound of the formula (V) 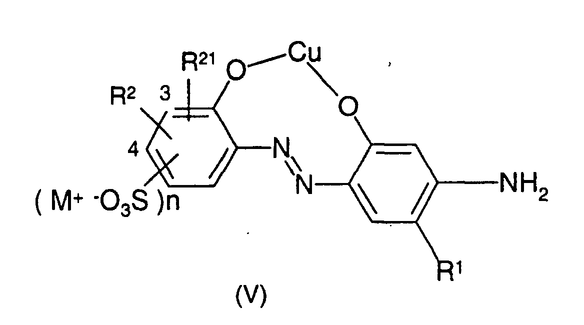 in the presence of aqueous lithium hydroxide at a temperature from 60 to 140°C.

11. A recording liquid comprising from 0.5 to 15% by weight, preferably from 1.5 to 8% by weight, of one or more dyes as claimed in one or more of claims 1 to 8.

12. The recording liquid as claimed in claim 11, consisting essentially of from 0.5 to 15% by weight of one or more of the dyes, from 5 to 99% by weight, preferably from 40 to 85% by weight, of water and from 0.5 to 94.5% by weight, preferably from 10 to 50% by weight, of organic solvent and/or hydrotropic compounds and, if desired, further customary additives.

13. The recording liquid as claimed in claim 11, consisting essentially of from 0.5 to 15% by weight of one or more of the dyes, from 5 to 20% by weight of water and from 70 to 94.5% by weight of organic solvent and/or hydrotropic compounds and, if desired, further customary additives.

14. The use of a dye as claimed in one or more of claims 1 to 8 for preparing an ink, especially an inkjet ink.

## Revendications

1. Colorant de formule générale (I) : 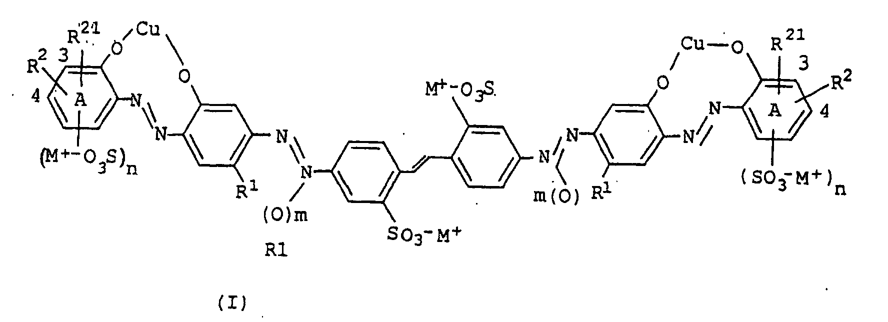 dans laquelle
R¹ représente un hydrogène, un alkyle doté de 1 à 4 atomes de C, un alcoxy doté de 1 à 4 atomes de C ;
R² représente un hydrogène, un carboxy, un chlore, un nitro ;
R²¹ représente un hydrogène ; ou R² et R²¹ forment ensemble un anneau de benzène condensé en positions 3 et 4 sur l'anneau A, pouvant porter 1, 2 ou 3 groupes sulfo ;
m représente un nombre de 0 à 1 ;
n représente un nombre 1 à 2 ;
M⁺ représente un cation ou un mélange de différents cations, dans lequel il y a par mol de colorant au moins 1 équivalent des cations cations lithium M⁺ et/ou cations de formule (II) : 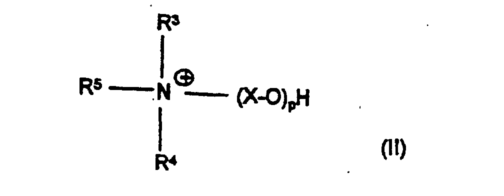
dans laquelle p représente un nombre de 1 à 30 ;
X représente CH₂CH₂, CH(CH₃)CH₂, CH₂CH(CH₃) ou une combinaison de ceux-ci et
R³, R⁴ et R⁵ indépendamment les uns des autres représentent un hydrogène, un groupe de formule (III)
-(-X-O-)ₚH (III)
ou un reste aliphatique doté de 1 à 18 atomes de C.

2. Colorant selon la revendication 1, **caractérisé en ce que** p est un nombre de 1 à 15.

3. Colorant selon la revendication 1 ou 2, **caractérisé en ce que** M est un mélange de cations lithium et de cations de formule (II).

4. Colorant selon au moins l'une des revendications 1 à 3, **caractérisé en ce que** R¹ est un hydrogène, un méthyle, un éthyle, un méthoxy ou un éthoxy.

5. Colorant selon au moins l'une des revendications 1 à 4, **caractérisé en ce que** R²¹ est un hydrogène.

6. Colorant selon au moins l'une des revendications 1 à 5, **caractérisé par** la formule générale (IB) 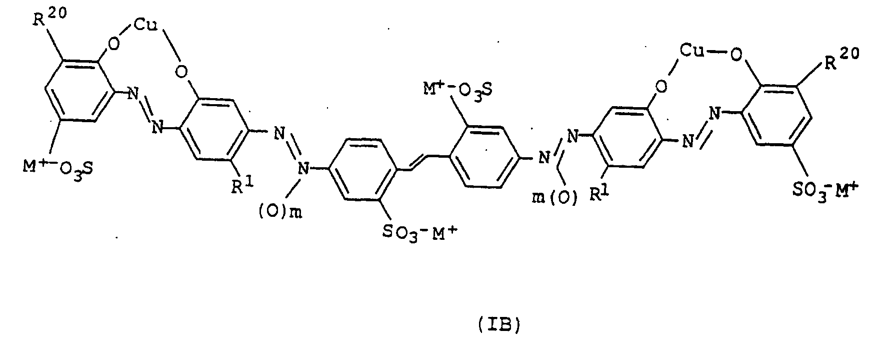 dans laquelle R¹, M et m sont définis comme à la revendication 1 et R²⁰ est un hydrogène, un sulfo, un Cl, un nitro ou un carboxyle.

7. Colorant selon au moins l'une des revendications 1 à 6, **caractérisé en ce que** l'amine à la base de la formule générale (II) est l'éthanolamine, la diéthanolamine, la triéthanolamine, la N-méthyl-N-diéthanolamine, la 2-(2-hydroxyéthoxy)-éthanamine, la di-(2-(2-hydroxyéthoxy)-éthane)-amine, la tri-(2-(2-hydroxyéthoxy)éthane-amine, l'ammoniaque éthoxylé et propoxylé, un amine aliphatique primaire, secondaire ou tertiaire avec 1 ou 2 restes alkyle en C₁-C₁₈ et 2 ou 1 chaînes (poly)oxyalkylèniques en C₂-C₃ avec de 1 à 30, de préférence de 1 à 25, unités hydroxyéthyle et/ou hydroxypropyle dans la chaîne.

8. Colorant selon au moins l'une des revendications 1 à 7, **caractérisé en ce que** l'amine à la base de la formule (II) est une amine grasse de coco, amine grasse d'huile de blanc de baleine, amine grasse de stéaryle ou amine grasse de suif éthoxylée et/ou propoxylée avec des degrés d'alcoxylation allant de 2 à 25.

9. Procédé de fabrication d'un colorant selon l'une ou plusieurs de revendications 1 à 8, **caractérisé en ce que** le sel de sodium du colorant de formule (I), dans laquelle M = Na, est transformé en solution aqueuse avec un acide en l'acide colorant correspondant et cet acide colorant réagit avec un composé du lithium ou/et une amine de formule (VI) et/ou un hydroxyde d'ammonium de formule (VII) :
R³R⁴N(-X-O-)ₚH (VI) 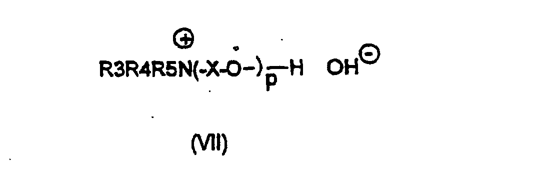
dans lesquelles R³, R⁴, R⁵, X et p sont définis comme à la revendication 1 ; ou **en ce que** le sel de sodium du colorant de formule (I) est transformé avec un sel d'ammonium d'une amine lipophile en le sel d'ammonium, insoluble ou difficilement soluble dans l'eau, du colorant correspondant, celui-ci est séparé et finalement transformé en solution aqueuse avec un composé du lithium et/ou une amine de formule (VI) et/ou un hydroxyde d'ammonium de formule (VII).

10. Procédé de fabrication d'un colorant de formule (I) avec M = Li selon l'une ou plusieurs des revendications 1 à 8, **caractérisé en ce qu'**un composé de formule (IV) : 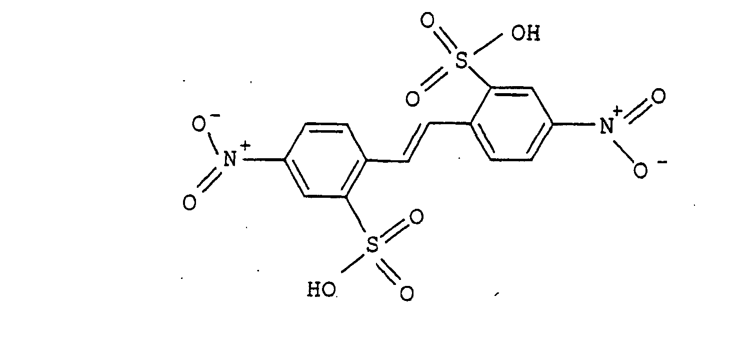 est condensé avec un composé de formule (V) : 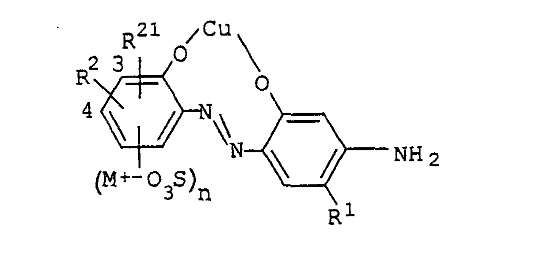 en présence d'hydroxyde de lithium aqueux à une température de 60 à 140°C.

11. Liquide d'impression, contenant de 0,5 à 15 % en poids, de préférence de 1,5 à 8 % en poids d'un ou de plusieurs colorants selon l'une ou plusieurs des revendications 1 à 8.

12. Liquide d'impression selon la revendication 11, constitué essentiellement de 0,5 à 15 % en poids d'un ou de plusieurs des colorants, 5 à 99 % en poids, de préférence 40 à 85 % en poids d'eau et 0,5 à 94,5 % en poids, de préférence 10 à 50 % en poids, de solvant organique et/ou de composés hydrotropes et les cas échéant d'autres additifs courants.

13. Liquide d'impression selon la revendication 11, constitué essentiellement de 0,5 à 15 % en poids d'un ou plusieurs colorants, 5 à 20 % en poids d'eau et 70 à 94,5 % en poids de solvant organique et/ou de composés hydrotropes et le cas échéant d'autres additifs courants.

14. Utilisation d'un colorant selon l'une ou plusieurs des revendications 1 à 8 pour la fabrication d'encre, en particulier d'encres pour jet d'encre.
